# EUROPEAN PATENT SPECIFICATION

(11) **EP 4 342 926 B1**
(45) Date of publication and mention of the grant of the patent: **08.10.2025**
(21) Application number: 23198652.2
(22) Date of filing: 20.09.2023
(51) Int. Cl.: C08G 63/181, C08G 63/183, C08G 63/78

(54) **PROCESS FOR PREPARING BIODEGRADABLE POLYESTER AND BIODEGRADABLE POLYESTER PREPARED THEREBY**
VERFAHREN ZUR HERSTELLUNG VON BIOLOGISCH ABBAUBAREM POLYESTER UND SO HERGESTELLTER BIOLOGISCH ABBAUBARER POLYESTER
PROCÉDÉ DE PRÉPARATION DE POLYESTER BIODÉGRADABLE ET POLYESTER BIODÉGRADABLE PRÉPARÉ PAR CE PROCÉDÉ

(30) Priority: 22.09.2022 KR 20220119728
(43) Date of publication of application: 27.03.2024
(73) Proprietor: Hanwha TotalEnergies Petrochemical Co., Ltd., Seosan-si, Chungcheongnam-do 31900 (KR)
(72) Inventor: KIM, In Ho, 31900 Chungcheongnam-do (KR); LEE, Dohoon, 31900 Chungcheongnam-do (KR); KIM, WanKeun, 31900 Chungcheongnam-do (KR)
(74) Representative: HGF

(56) References cited:
- CN-A- 103 304 789
- CN-A- 111 793 331
- CN-A- 113 026 142
- US-B2- 9 334 360

## Description

### Title of the Invention

Process for Preparing Biodegradable Polyester and Biodegradable Polyester Prepared Thereby

### Technical Field

The present invention relates to a process for preparing a biodegradable polyester resin with suppressed discoloration and to a biodegradable polyester resin prepared by the process. Specifically, the present invention relates to a process for preparing a biodegradable polyester resin with suppressed discoloration using an aliphatic dicarboxylic acid, an aromatic dicarboxylic acid, and an aliphatic diol compound having a short chain length of less than 4 carbon atoms and to a biodegradable polyester resin prepared by the process.

### Background Art of the Invention

Recently, the seriousness of environmental problems has been recognized worldwide. Accordingly, environmental regulations are being strengthened, and research on materials that can replace general-purpose plastics while reducing environmental pollution is being actively conducted. Biodegradable plastics, among them, that can be naturally decomposed under specific conditions are attracting much attention as alternative materials capable of manufacturing various disposable household items. In particular, poly(butylene adipate-co-terephthalate), which can be prepared by reacting 1,4-butanediol with adipic acid and terephthalic acid or dimethyl terephthalate, is currently widely used as a biodegradable polyester resin.

Although the physical properties of poly(butylene adipate-co-terephthalate) vary from manufacturer to manufacturer, common desired properties include high molecular weight and intrinsic viscosity, low acid value, high hydrolysis resistance, and discoloration inhibition. Since these properties are basically related to the durability and processability of a biodegradable polyester resin, in order to develop a biodegradable polyester resin suitable for new uses by adjusting the glass transition temperature, melting temperature, crystallinity, rigidity, ductility, and biodegradation rate, which are inherent properties of the material, it is necessary to adopt a method in which the type or content of dicarboxylic acid is changed.

For example, the development of biodegradable polyester resins based on 1,4-butanediol such as polybutylene succinate, poly(butylene succinate adipate), poly(butylene isosorbide succinate), poly(butylene succinate adipate terephthalate), and the like has been reported (see, e.g., Nikolic, M.S. et al., 2001, "Synthesis and characterization of biodegradable poly(butylene succinate-co-butylene adipate)s," Qi, J. et al., 2019, "An investigation of the thermal and (bio)degradability of PBS copolyesters based on isosorbide," and U.S. Patent Application Publication No. 2017/0112111).

On the other hand, although an aliphatic diol compound having a chain length of less than 4 carbon atoms, particularly ethylene glycol, has excellent price competitiveness over 1,4-butanediol, a method for preparing a biodegradable polyester resin using the former has been hardly reported. Since a biodegradable polyester resin derived from ethylene glycol has different physical properties from a biodegradable polyester resin derived from 1,4-butanediol, it has the potential to replace existing biodegradable resins or be applied to other applications. CN111793331A discloses a biodegradable in-situ nano composite material as well as preparation method and application thereof.

### Prior Art Document

### Patent Document

(Patent Document 1) U.S. Patent Application Publication No. 2017/0112111) Non-patent Document
(Non-patent Document 1) Nikolic, M.S. et al., 2001, "Synthesis and characterization of biodegradable poly(butylene succinate-co-butylene adipate)s"
(Non-patent Document 2) Qi, J. et al., 2019, "An investigation of the thermal and (bio)degradability of PBS copolyesters based on isosorbide"

### Disclosure of the Invention

### Technical Problem to be Solved

An object of the present invention is to provide a process for preparing a biodegradable polyester resin with effectively suppressed discoloration.

Another object of the present invention is to provide a biodegradable polyester resin with effectively suppressed discoloration prepared by the above preparation process.

### Solution to the Problem

According to an embodiment of the present invention, there is provided a process for preparing a biodegradable polyester resin, which comprises (1) subjecting a reaction mixture comprising (a) a dicarboxylic acid component comprising an aromatic dicarboxylic acid and an aliphatic dicarboxylic acid, (b) a diol component comprising an aliphatic diol having a short chain length of less than 4 carbon atoms, and (c) a discoloration inhibitor to an esterification reaction or a transesterification reaction in the presence of the entire amount of a catalyst, or a part thereof, to obtain a prepolymer; and (2) subjecting the prepolymer obtained in step (1) to a polycondensation reaction in the presence of a stabilizer and the remainder of the catalyst, or without an additional catalyst, to obtain a biodegradable polyester resin, wherein the polycondensation reaction of the prepolymer is carried out at a temperature in the range of 220 to 235°C, the discoloration inhibitor comprises a compound represented by Formula 1 in an amount of 1.5 to 3.5% by mole when Y is hydrogen or a methyl group, or in an amount of 1.0 to 2.0% by mole when Y is a hydroxyl group, based on the total number of moles of the dicarboxylic acid component (a), the biodegradable polyester resin has a melt flow index of 100 g/10 minutes or less when measured at 190°C under a load of 2.16 kg, the color characteristic L* is 60 or more, and each of a* and b* is 8 or less. 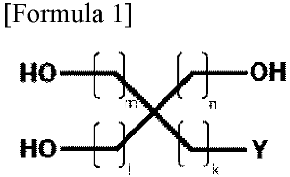 in the above formula, m, n, 1≥ 1, k ≥ 0, and Y is hydrogen, a hydroxyl group, or a methyl group.

In a specific embodiment of the present invention, the aromatic dicarboxylic acid may comprise at least one selected from the group consisting of terephthalic acid, isophthalic acid, orthophthalic acid, naphthalene dicarboxylic acid, dimethyl terephthalate, dimethyl isophthalate, dimethyl phthalate, and dimethyl naphthalene dicarboxylate.

In a specific embodiment of the present invention, the aliphatic dicarboxylic acid may comprise at least one selected from the group consisting of oxalic acid, malonic acid, succinic acid, glutaric acid, adipic acid, pimelic acid, suberic acid, azelaic acid, sebacic acid, and ester compounds thereof.

In a preferred embodiment of the present invention, the aromatic dicarboxylic acid may comprise terephthalic acid, and the aliphatic dicarboxylic acid may comprise adipic acid.

In a specific embodiment of the present invention, the content of the aromatic dicarboxylic acid may be 20% by mole to 60% by mole based on the total number of moles of the dicarboxylic acid component, and the content of the aliphatic dicarboxylic acid may be 40% by mole to 80% by mole based on the total number of moles of the dicarboxylic acid component.

In a specific embodiment of the present invention, the diol component (b) may comprise at least one selected from the group consisting of ethylene glycol, 1,2-propanediol, and 1,3-propanediol.

In a preferred embodiment of the present invention, the diol component (b) may comprise ethylene glycol.

In a specific embodiment of the present invention, the molar ratio of the diol component (b) to the dicarboxylic acid component (a) may be 1.1:1 to 1.5:1.

In a specific embodiment of the present invention, the compound represented by Formula 1 may comprise at least one selected from the group consisting of glycerol, trimethylolpropane, and pentaerythritol.

In a specific embodiment of the present invention, the catalyst may comprise at least one selected from the group consisting of tetrabutyl titanate, tetraisopropyl titanate, zinc acetate, and antimony oxide, and the content of the catalyst may be 0.01 to 5.0 g relative to 1 mole of the dicarboxylic acid component (a).

In a specific embodiment of the present invention, the stabilizer may comprise at least one selected from the group consisting of phosphorous acid, triphenyl phosphate, and triethyl phosphonoacetate, and the content of the stabilizer may be 0.01 to 5.0 g relative to 1 mole of the dicarboxylic acid component (a).

In a specific embodiment of the present invention, the esterification reaction or the transesterification reaction of the reaction mixture may be carried out in one reactor at different temperature ranges, in which a first esterification or transesterification reaction may be carried out at a temperature in the range of 180 to 200°C, and a second esterification or transesterification reaction may be carried out at a temperature in the range of 220 to 235°C.

In a specific embodiment of the present invention, the polycondensation reaction of the prepolymer may be carried out at a degree of vacuum of less than 1 Torr for 60 to 420 minutes.

According to another embodiment of the present invention, there is provided a biodegradable polyester resin, which is prepared by the above preparation process, comprises dicarboxylic acid residues derived from an aliphatic dicarboxylic acid and an aromatic dicarboxylic acid and diol residues derived from a short aliphatic diol having a chain length of less than 4 carbon atoms, and has a melt flow index of 100 g/10 minutes or less when measured at 190°C under a load of 2.16 kg, wherein the color characteristic L* is 60 or more, and each of a* and b* is 8 or less.

In a specific embodiment of the present invention, the biodegradable polyester resin may be used for an application selected from the group consisting of disposable films or sheets, tableware, and agricultural films or sheets.

### Advantageous Effects of the Invention

The process for preparing a biodegradable polyester resin according to an embodiment of the present invention can provide a biodegradable polyester resin with effectively suppressed discoloration.

In addition, the biodegradable polyester resin prepared by the above preparation process can be used in various fields since its discoloration is effectively suppressed.

### Detailed Description for Carrying out the Invention

Hereinafter, the present invention will be described in detail.

According to an embodiment of the present invention, there is provided a process for preparing a biodegradable polyester resin, which comprises (1) subjecting a reaction mixture comprising (a) a dicarboxylic acid component comprising an aromatic dicarboxylic acid and an aliphatic dicarboxylic acid, (b) a diol component comprising an aliphatic diol having a short chain length of less than 4 carbon atoms, and (c) a discoloration inhibitor to an esterification reaction or a transesterification reaction in the presence of the entire amount of a catalyst, or a part thereof, to obtain a prepolymer; and (2) subjecting the prepolymer obtained in step (1) to a polycondensation reaction in the presence of a stabilizer and the remainder of the catalyst, or without an additional catalyst, to obtain a biodegradable polyester resin, wherein the polycondensation reaction of the prepolymer is carried out at a temperature in the range of 220 to 235°C.

### Step (1)

In step (1) of the process for preparing a biodegradable polyester resin according to an embodiment of the present invention, a reaction mixture comprising (a) a dicarboxylic acid component comprising an aromatic dicarboxylic acid and an aliphatic dicarboxylic acid, (b) a diol component comprising an aliphatic diol having a short chain length of less than 4 carbon atoms, and (c) a discoloration inhibitor is subjected to an esterification reaction or a transesterification reaction in the presence of the entire amount of a catalyst, or a part thereof, to obtain a prepolymer.

In step (1), the reaction mixture comprises (a) a dicarboxylic acid component comprising an aromatic dicarboxylic acid and an aliphatic dicarboxylic acid, (b) a diol component comprising an aliphatic diol having a short chain length of less than 4 carbon atoms, and (c) a discoloration inhibitor.

In a specific embodiment of the present invention, the dicarboxylic acid component (a) as a component of the reaction mixture comprises an aromatic dicarboxylic acid and an aliphatic dicarboxylic acid. Here, the aromatic dicarboxylic acid may comprise an ester compound thereof, and aliphatic dicarboxylic acid may comprise an ester compound thereof. Specifically, the ester compound of a dicarboxylic acid may refer to an ester compound in which hydrogen at both terminals of the dicarboxylic acid is substituted with alkyl having 1 to 6 carbon atoms.

In a specific embodiment of the present invention, the aromatic dicarboxylic acid may comprise at least one selected from the group consisting of terephthalic acid, isophthalic acid, orthophthalic acid, naphthalene dicarboxylic acid, dimethyl terephthalate, dimethyl isophthalate, dimethyl phthalate, and dimethyl naphthalene dicarboxylate, but it is not particularly limited thereto. In a preferred embodiment of the present invention, the aromatic dicarboxylic acid may comprise terephthalic acid.

In a specific embodiment of the present invention, the aliphatic dicarboxylic acid may comprise at least one selected from the group consisting of oxalic acid, malonic acid, succinic acid, glutaric acid, adipic acid, pimelic acid, suberic acid, azelaic acid, sebacic acid, and ester compounds thereof, but it is not particularly limited thereto. In a preferred embodiment of the present invention, the aliphatic dicarboxylic acid may comprise adipic acid.

In a preferred embodiment of the present invention, the aromatic dicarboxylic acid may comprise terephthalic acid, and the aliphatic dicarboxylic acid may comprise adipic acid.

In a specific embodiment of the present invention, the content of the aromatic dicarboxylic acid may be 20% by mole to 60% by mole based on the total number of moles of the dicarboxylic acid component. Preferably, the content of the aromatic dicarboxylic acid may be 40% by mole to 60% by mole based on the total number of moles of the dicarboxylic acid component.

In a specific embodiment of the present invention, the content of the aliphatic dicarboxylic acid may be 40% by mole to 80% by mole based on the total number of moles of the dicarboxylic acid component. Preferably, the content of the aliphatic dicarboxylic acid may be 40% by mole to 60% by mole based on the total number of moles of the dicarboxylic acid component.

If the content of the aromatic dicarboxylic acid exceeds 60% by mole based on the total number of moles of the dicarboxylic acid component, the biodegradability of a biodegradable polyester resin thus prepared may deteriorate. Meanwhile, if the content of the aliphatic dicarboxylic acid exceeds 80% by mole based on the total number of moles of the dicarboxylic acid component, the mechanical properties of a biodegradable polyester resin thus prepared may deteriorate.

In a specific embodiment of the present invention, the diol component (b) as another component of the reaction mixture comprises an aliphatic diol having a short chain length of less than 4 carbon atoms.

In a specific embodiment of the present invention, the diol component (b) may comprise at least one selected from the group consisting of ethylene glycol, 1,2-propanediol, and 1,3-propanediol. In a preferred embodiment of the present invention, the diol component (b) may comprise ethylene glycol.

In a specific embodiment of the present invention, the molar ratio of the diol component (b) to the dicarboxylic acid component (a) may be 1.1:1 to 1.5:1. The smaller this molar ratio, the more advantageous in terms of economic efficiency. If it is too small, however, the polymerization rate may be lowered due to an imbalance in the equivalence ratio between the diol and the dicarboxylic acid.

In step (1), the reaction mixture comprises a discoloration inhibitor (c). Here, the discoloration inhibitor is preferably contained in the reaction mixture. But it is not excluded from the scope of the present invention that the discoloration inhibitor is separately added during the esterification or transesterification reaction or the polycondensation reaction.

In a specific embodiment of the present invention, the discoloration inhibitor may comprise a compound represented by the following Formula 1. 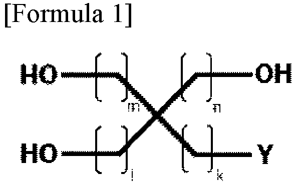 in the above formula, m, n, l ≥ 1, k ≥ 0, and Y is hydrogen, a hydroxyl group, or a methyl group.

In a specific embodiment of the present invention, the compound represented by Formula 1 may comprise at least one selected from the group consisting of glycerol, trimethylolpropane, and pentaerythritol, but it is not limited thereto.

The compound represented by Formula 1 exemplified above is known as a branching agent since it can form a branching structure in three or more directions in the preparation of a polyester, and it is mainly used as a means for increasing the molecular weight of a polyester or enhancing the shear thinning effect.

In the present invention, however, the compound represented by Formula 1 acts as a discoloration inhibitor to solve the discoloration phenomenon that may take place in the preparation of a polyester when a short aliphatic diol having a chain length of less than 4 carbon atoms is used.

The discoloration problem in the preparation of a polyester using an aliphatic diol having a short chain length of less than 4 carbon atoms may be caused by a change in the chemical structure of the ester bond between the aliphatic diol and an aliphatic dicarboxylic acid due to a thermal side reaction or depolymerization. For example, as reported in Venkatachalam, S. et al., 2012, "Degradation and Recyclability of Poly(Ethylene Terephthalate)," the discoloration of polyethylene terephthalate is understood to be attributable to the formation of a conjugated diene having a long chain length due to β-scission of the main chain.

In the present invention, however, the temperature of the polycondensation reaction is in the range of 220 to 235°C, which is lower than that for polyethylene terephthalate (about 260°C or higher). Thus, it can be seen that the substance causing the discoloration is formed from an ester bond between the aliphatic diol and the aliphatic dicarboxylic acid rather than an ester bond between the aliphatic diol and the aromatic dicarboxylic acid. The compound represented by Formula 1 is understood to inhibit the scission of an ester bond between the aliphatic diol and the aliphatic dicarboxylic acid.

The compound represented by Formula 1 is employed in an amount of 1.5 to 3.5% by mole based on the total number of moles of the dicarboxylic acid component (a) when Y is hydrogen or a methyl group. In order to more effectively inhibit the discoloration of a polyester, the compound represented by Formula 1 may preferably be employed in an amount of 1.6 to 2.5% by mole based on the total number of moles of the dicarboxylic acid component (a) when Y is hydrogen or a methyl group.

If the content of the compound represented by Formula 1 is less than 1.5% by mole when Y is hydrogen or a methyl group, the discoloration of the reaction mixture may take place rapidly within several tens of minutes after the beginning of the polycondensation reaction. If this content exceeds 3.5% by mole%, there is a possibility that the reaction mixture is gelated.

In addition, the compound represented by Formula 1 is employed in an amount of 1.0 to 2.0% by mole based on the total number of moles of the dicarboxylic acid component (a) when Y is a hydroxyl group. In order to more effectively inhibit the discoloration of a polyester, the compound represented by Formula 1 may preferably be employed in an amount of 1.1 to 1.5% by mole based on the total number of moles of the dicarboxylic acid component (a) when Y is a hydroxyl group.

If the content of the compound represented by Formula 1 is less than 1.0% by mole when Y is a hydroxyl group, the discoloration of the reaction mixture may take place rapidly within several tens of minutes after the beginning of the polycondensation reaction. If this content exceeds 2.0% by mole%, there is a possibility that the reaction mixture is gelated.

In step (1), the reaction mixture is subjected to an esterification reaction or a transesterification reaction in the presence of the entire amount of a catalyst, or a part thereof, to obtain a prepolymer.

In a specific embodiment of the present invention, the catalyst may comprise at least one selected from the group consisting of tetrabutyl titanate, tetraisopropyl titanate, zinc acetate, and antimony oxide, but it is not particularly limited thereto.

The catalyst may be employed in an amount of 0.01 to 5.0 g relative to 1 mole of the dicarboxylic acid component (a). Preferably, the catalyst may be employed in an amount of 0.1 to 1.0 g relative to 1 mole of the dicarboxylic acid component (a).

In step (1), the reaction mixture may be subjected to an esterification reaction or a transesterification reaction in the presence of the entire amount of the catalyst to obtain a prepolymer. In such a case, the catalyst remaining in the prepolymer can be used in the polycondensation reaction described below without an additional catalyst. Alternatively, the reaction mixture may be subjected to an esterification reaction or a transesterification reaction in the presence of a part of the catalyst to obtain a prepolymer. In such a case, the prepolymer obtained may be subjected to a polycondensation reaction in the presence of the remainder of the catalyst.

In a specific embodiment of the present invention, the esterification reaction or the transesterification reaction of the reaction mixture may be carried out in one reactor at different temperature ranges. For example, a first esterification or transesterification reaction may be carried out at a temperature in the range of 180 to 200°C for 60 to 90 minutes in which the aliphatic dicarboxylic acid and the aliphatic diol form oligomers through a condensation reaction. A second esterification or transesterification reaction may be carried out at a temperature in the range of 220 to 235°C for 60 to 90 minutes to form a polyester prepolymer.

### Step (2)

In step (2) of the process for preparing a biodegradable polyester resin according to an embodiment of the present invention, the prepolymer obtained in step (1) is subjected to a polycondensation reaction in the presence of a stabilizer and the remainder of the catalyst, or without an additional catalyst, to obtain a biodegradable polyester resin.

In a specific embodiment of the present invention, the stabilizer may comprise at least one selected from the group consisting of phosphorous acid, triphenyl phosphate, and triethyl phosphonoacetate, but it is not particularly limited thereto.

The stabilizer may be employed in an amount of 0.01 to 5.0 g relative to 1 mole of the dicarboxylic acid component (a). Preferably, the stabilizer may be employed in an amount of 0.1 to 4.0 g relative to 1 mole of the dicarboxylic acid component (a). Although the stabilizer is employed in step (2) in an embodiment of the present invention, a part thereof may be employed in step (1). Details of the catalyst are as described in step (1) above.

In step (2), the prepolymer may be increased in the degree of polymerization through a polycondensation reaction. The polycondensation reaction is carried out at a temperature in the range of 220 to 235°C. The polycondensation reaction may be carried out at a degree of vacuum of less than 1 Torr for 60 to 420 minutes. Here, if the temperature of the polycondensation reaction exceeds 235°C, the discoloration of the aliphatic-aromatic polyester may take place rapidly within several tens of minutes; thus, the reaction is preferably carried out in a temperature range of 220 to 230°C.

The biodegradable polyester resin obtained in step (2) has a melt flow index of 100 g/10 minutes or less when measured at 190°C under a load of 2.16 kg, and the color characteristic L* is 60 or more, and each of a* and b* is 8 or less.

According to another embodiment of the present invention, there is provided a biodegradable polyester resin, which is prepared by the above preparation process and has a melt flow index of 100 g/10 minutes or less when measured at 190°C under a load of 2.16 kg, wherein the color characteristic L* is 60 or more, and each of a* and b* is 8 or less.

The biodegradable polyester resin according to an embodiment of the present invention may comprise dicarboxylic acid residues derived from an aliphatic dicarboxylic acid and an aromatic dicarboxylic acid and diol residues derived from a short aliphatic diol having a chain length of less than 4 carbon atoms.

The aliphatic-aromatic polyester according to an embodiment of the present invention may be biodegradable under test conditions conforming to international standard ISO 14855-1 for biodegradability evaluation.

The biodegradable polyester resin according to an embodiment of the present invention may be used for various household applications such as disposable films or sheets, tableware, and agricultural films or sheets in which conventional poly(butylene adipate-co-terephthalate) is used.

### Example

Hereinafter, the present invention will be described in more detail with reference to Examples and Comparative Examples. However, the following examples are provided only for illustration purposes, and the present invention is not limited thereto.

### Example 1

A reactor equipped with a condenser was charged with 1.61 moles of ethylene glycol, 0.60 mole of adipic acid, and 0.55 mole of terephthalic acid. Added to this mixture were 0.3 g of tetrabutyl titanate and 1.72 g of glycerol. The resultant was subjected to a first esterification reaction at 190°C for 60 minutes. Subsequently, the temperature of the reactor was raised to 230°C, and a second esterification reaction was carried out for 90 minutes.

Next, 0.27 g of tetrabutyl titanate and 0.05 g of phosphorous acid were additionally added to the prepolymer, and a polycondensation reaction was carried out at 230°C under a vacuum of less than 1 Torr for 150 minutes to obtain an aliphatic-aromatic polyester.

### Example 2

An aliphatic-aromatic polyester was obtained in the same manner as in Example 1, except that the amount of glycerol was changed to 2.30 g.

### Example 3

An aliphatic-aromatic polyester was obtained in the same manner as in Example 1, except that 2.30 g of pentaerythritol was used as a discoloration inhibitor instead of glycerol and that the polycondensation reaction was carried out for 180 minutes.

### Comparative Example 1

An aliphatic-aromatic polyester was obtained in the same manner as in Example 1, except that the amount of glycerol was changed to 1.15 g and that the polycondensation reaction was carried out for 240 minutes.

### Comparative Example 2

An aliphatic-aromatic polyester was obtained in the same manner as in Example 1, except that 3.45 g of pentaerythritol was used as a discoloration inhibitor instead of glycerol and that the polycondensation reaction was carried out for 60 minutes.

### Comparative Example 3

An aliphatic-aromatic polyester was obtained in the same manner as in Example 1, except that 1.15 g of pentaerythritol was used as a discoloration inhibitor instead of glycerol and that the polycondensation reaction was carried out for 240 minutes.

### Comparative Example 4

An aliphatic-aromatic polyester was obtained in the same manner as in Example 1, except that 0.57 g of pentaerythritol was used as a discoloration inhibitor instead of glycerol and that the polycondensation reaction was carried out for 240 minutes.

### Comparative Example 5

An aliphatic-aromatic polyester was obtained in the same manner as in Example 1, except that a discoloration inhibitor was not used and that the polycondensation reaction was carried out for 240 minutes.

The polymerization conditions of the Examples and Comparative Examples are summarized in Table 1 below.

**[Table 1]**

| | Discoloration inhibitor (g; % by mole)* | | Polycondensation time (minutes) |
|---|---|---|---|
| | Glycerol | Pentaerythritol | |
| Example 1 | 1.72 (1.63) | - | 150 |
| Example 2 | 2.30 (2.17) | - | 150 |
| Example 3 | - | 2.30 (1.47) | 180 |
| Comparative Example 1 | 1.15 (1.09) | - | 240 |
| Comparative Example 2 | - | 3.45 (2.20) | 60 |
| Comparative Example 3 | - | 1.15 (0.73) | 240 |
| Comparative Example 4 | - | 0.57 (0.37) | 240 |
| Comparative Example 5 | - | - | 240 |

| | | | |
|---|---|---|---|
| * The value in parentheses refers to the content (% by mole) of a discoloration inhibitor based on the total number of moles of the dicarboxylic acid. | | | |

### Test Example

The aliphatic-aromatic polyesters obtained in the Examples and Comparative Examples were each tested in the following manner. The results are shown in Table 2 below.

### (1) Melt flow index (MFI)

The melt flow index of the aliphatic-aromatic polyester was measured at 190°C under a load of 2.16 kg according to ASTM D1238. When the melt flow index exceeded 200 g/10 minutes, an approximate value is indicated in the table with an error of the measured value of ± 10%.

### (2) Color characteristics

The color characteristics of the aliphatic-aromatic polyester were measured using a spectrophotometer (SE 7700, NIPPON DENSHOKU).

### (3) Gels

1 g of the aliphatic-aromatic polyester was completely dissolved in 50 ml of a chloroform solvent, and gelation of the product was observed from the presence or absence of gels filtered through a stainless-steel net (60 mesh).

**[Table 2]**

| | MFI (g/10 min.) | L* | a* | b* | Gelation |
|---|---|---|---|---|---|
| Example 1 | 34 | 66 | 1 | 0 | - |
| Example 2 | 100 | 65 | 0 | 0 | - |
| Example 3 | 40 | 65 | 3 | 13 | - |
| Comparative Example 1 | about 400 | 53 | 23 | 32 | - |
| Comparative Example 2 | 50 | 70 | -1 | -3 | ○ |
| Comparative Example 3 | about 200 | 56 | 15 | 16 | - |
| Comparative Example 4 | >> 400 | 47 | 37 | 37 | - |
| Comparative Example 5 | >> 400 | 33 | 25 | 32 | - |

As can be seen from Tables 1 and 2 above, when Examples 1 to 3 are compared with Comparative Examples 1 and 3 to 5, in which the compound of Formula 1 was used, the color characteristic L* value was high, and a * and b* values were close to zero in the Examples. In addition, the melt flow index was 100 g/10 minutes or less when measured at 190°C under a load of 2.16 kg.

Meanwhile, in Comparative Example 2 in which the compound of Formula 1 was used in an amount exceeding the range of the present invention, gelation took place while the color characteristics of the product were excellent.

## Claims

1. A process for preparing a biodegradable polyester resin, which comprises (1) subjecting a reaction mixture comprising (a) a dicarboxylic acid component comprising an aromatic dicarboxylic acid and an aliphatic dicarboxylic acid, (b) a diol component comprising an aliphatic diol having a short chain length of less than 4 carbon atoms, and (c) a discoloration inhibitor to an esterification reaction or a transesterification reaction in the presence of the entire amount of a catalyst, or a part thereof, to obtain a prepolymer; and (2) subjecting the prepolymer obtained in step (1) to a polycondensation reaction in the presence of a stabilizer and the remainder of the catalyst, or without an additional catalyst, to obtain a biodegradable polyester resin, wherein the polycondensation reaction of the prepolymer is carried out at a temperature in the range of 220 to 235°C, the discoloration inhibitor comprises a compound represented by Formula 1 in an amount of 1.5 to 3.5% by mole when Y is hydrogen or a methyl group, or in an amount of 1.0 to 2.0% by mole when Y is a hydroxyl group, based on the total number of moles of the dicarboxylic acid component (a), the biodegradable polyester resin has a melt flow index of 100 g/10 minutes or less when measured at 190°C under a load of 2.16 kg according to ASTM D1238, the color characteristic L* is 60 or more, and each of a* and b* is 8 or less according to the method outlined in the description: 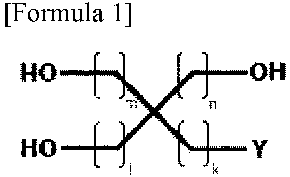 in the above formula, m, n, l ≥ 1, k ≥ 0, and Y is hydrogen, a hydroxyl group, or a methyl group.

2. The process for preparing a biodegradable polyester resin of claim 1, wherein the aromatic dicarboxylic acid comprises at least one selected from the group consisting of terephthalic acid, isophthalic acid, orthophthalic acid, naphthalene dicarboxylic acid, dimethyl terephthalate, dimethyl isophthalate, dimethyl phthalate, and dimethyl naphthalene dicarboxylate.

3. The process for preparing a biodegradable polyester resin of claim 1 or 2, wherein the aliphatic dicarboxylic acid comprises at least one selected from the group consisting of oxalic acid, malonic acid, succinic acid, glutaric acid, adipic acid, pimelic acid, suberic acid, azelaic acid, sebacic acid, and ester compounds thereof.

4. The process for preparing a biodegradable polyester resin of claim 1, 2 or 3, wherein the aromatic dicarboxylic acid comprises terephthalic acid, and the aliphatic dicarboxylic acid comprises adipic acid.

5. The process for preparing a biodegradable polyester resin of any preceding claim, wherein the content of the aromatic dicarboxylic acid is 20% by mole to 60% by mole based on the total number of moles of the dicarboxylic acid component, and the content of the aliphatic dicarboxylic acid is 40% by mole to 80% by mole based on the total number of moles of the dicarboxylic acid component.

6. The process for preparing a biodegradable polyester resin of any preceding claim, wherein the diol component (b) comprises at least one selected from the group consisting of ethylene glycol, 1,2-propanediol, and 1,3-propanediol.

7. The process for preparing a biodegradable polyester resin of claim 6, wherein the diol component (b) comprises ethylene glycol.

8. The process for preparing a biodegradable polyester resin of any preceding claim, wherein the molar ratio of the diol component (b) to the dicarboxylic acid component (a) is 1.1:1 to 1.5:1.

9. The process for preparing a biodegradable polyester resin of any preceding claim, wherein the compound represented by Formula 1 comprises at least one selected from the group consisting of glycerol, trimethylolpropane, and pentaerythritol.

10. The process for preparing a biodegradable polyester resin of any preceding claim, wherein the catalyst comprises at least one selected from the group consisting of tetrabutyl titanate, tetraisopropyl titanate, zinc acetate, and antimony oxide, and the content of the catalyst is 0.01 to 5.0 g relative to 1 mole of the dicarboxylic acid component (a).

11. The process for preparing a biodegradable polyester resin of any preceding claim, wherein the esterification reaction or the transesterification reaction of the reaction mixture is carried out in one reactor at different temperature ranges, in which a first esterification or transesterification reaction is carried out at a temperature in the range of 180 to 200°C, and a second esterification or transesterification reaction is carried out at a temperature in the range of 220 to 235°C.

12. The process for preparing a biodegradable polyester resin of any preceding claim, wherein the stabilizer comprises at least one selected from the group consisting of phosphorous acid, triphenyl phosphate, and triethyl phosphonoacetate, and the content of the stabilizer is 0.01 to 5.0 g relative to 1 mole of the dicarboxylic acid component (a).

13. The process for preparing a biodegradable polyester resin of any preceding claim, wherein the polycondensation reaction of the prepolymer is carried out at a degree of vacuum of less than 1 Torr for 60 to 420 minutes.

14. A biodegradable polyester resin obtainable by the process according to any one of claims 1 to 13, wherein the biodegradable polyester resin comprises dicarboxylic acid residues derived from an aliphatic dicarboxylic acid and an aromatic dicarboxylic acid and diol residues derived from a short aliphatic diol having a chain length of less than 4 carbon atoms, and has a melt flow index of 100 g/10 minutes or less when measured at 190°C under a load of 2.16 kg according to ASTM D1238, wherein the color characteristic L* is 60 or more, and each of a* and b* is 8 or less according to the method outlined in the description.

15. Use of the biodegradable polyester resin of claim 14in an application selected from the group consisting of disposable films or sheets, tableware, and agricultural films or sheets.

## Patentansprüche

1. Verfahren zum Herstellen eines biologisch abbaubaren Polyesterharzes, umfassend (1) Unterziehen eines Reaktionsgemischs, umfassend (a) eine Dicarbonsäurekomponente, die eine aromatische Dicarbonsäure und eine aliphatische Dicarbonsäure umfasst, (b) eine Diolkomponente, die ein aliphatisches Diol mit einer kurzen Kettenlänge von weniger als 4 Kohlenstoffatomen umfasst, und (c) einen Verfärbungsinhibitor einer Veresterungsreaktion oder einer Umesterungsreaktion in Gegenwart der gesamten Menge eines Katalysators oder eines Teils davon, um ein Prepolymer zu erhalten; und (2) Unterziehen des in Schritt (1) erhaltenen Prepolymers einer Polykondensationsreaktion in Gegenwart eines Stabilisators und des Rests des Katalysators oder ohne einen zusätzlichen Katalysator, um ein biologisch abbaubares Polyesterharz zu erhalten, wobei die Polykondensationsreaktion des Prepolymers bei einer Temperatur im Bereich von 220 bis 235 °C durchgeführt wird, der Verfärbungsinhibitor eine durch Formel 1 dargestellte Verbindung in einer Menge von 1,5 bis 3,5 Mol-% umfasst, wenn Y Wasserstoff oder eine Methylgruppe ist, oder in einer Menge von 1,0 bis 2,0 Mol-%, wenn Y eine Hydroxygruppe ist, bezogen auf die Mol-Gesamtzahl der Dicarbonsäurekomponente (a), das biologisch abbaubare Polyesterharz einen Schmelzflussindex von 100 g/10 Minuten oder weniger aufweist, wenn es bei 190 °C unter einer Last von 2,16 kg gemäß ASTM D1238 gemessen wird, das Farbmerkmal L* 60 oder mehr ist und jedes von a* und b* 8 oder weniger gemäß der in der Beschreibung beschriebenen Methode ist: 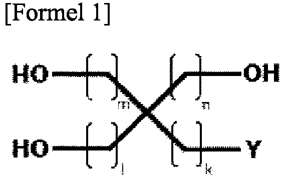 in der obigen Formel ist m, n, 1 ≥ 1, k ≥ 0 und Y Wasserstoff, eine Hydroxygruppe oder eine Methylgruppe.

2. Verfahren zum Herstellen eines biologisch abbaubaren Polyesterharzes nach Anspruch 1, wobei die aromatische Dicarbonsäure mindestens eines ausgewählt aus der Gruppe bestehend aus Terephthalsäure, Isophthalsäure, Orthophthalsäure, Naphthalindicarbonsäure, Dimethylterephthalat, Dimethylisophthalat, Dimethylphthalat und Dimethylnaphthalindicarboxylat umfasst.

3. Verfahren zum Herstellen eines biologisch abbaubaren Polyesterharzes nach Anspruch 1 oder 2, wobei die aliphatische Dicarbonsäure mindestens eines ausgewählt aus der Gruppe bestehend aus Oxalsäure, Malonsäure, Bernsteinsäure, Glutarsäure, Adipinsäure, Pimelinsäure, Korksäure, Azelainsäure, Sebacinsäure und Esterverbindungen davon umfasst.

4. Verfahren zum Herstellen eines biologisch abbaubaren Polyesterharzes nach Anspruch 1, 2 oder 3, wobei die aromatische Dicarbonsäure Terephthalsäure umfasst und die aliphatische Dicarbonsäure Adipinsäure umfasst.

5. Verfahren zum Herstellen eines biologisch abbaubaren Polyesterharzes nach einem der vorhergehenden Ansprüche, wobei der Gehalt an der aromatischen Dicarbonsäure 20 Mol-% bis 60 Mol-% beträgt, bezogen auf die Mol-Gesamtzahl der Dicarbonsäurekomponente, und der Gehalt der aliphatischen Dicarbonsäure 40 Mol-% bis 80 Mol-% beträgt, bezogen auf die Mol-Gesamtzahl der Dicarbonsäurekomponente.

6. Verfahren zum Herstellen eines biologisch abbaubaren Polyesterharzes nach einem der vorhergehenden Ansprüche, wobei die Diolkomponente (b) mindestens eines ausgewählt aus der Gruppe bestehend aus Ethylenglykol, 1,2-Propandiol und 1,3-Propandiol umfasst.

7. Verfahren zum Herstellen eines biologisch abbaubaren Polyesterharzes nach Anspruch 6, wobei die Diolkomponente (b) Ethylenglykol umfasst.

8. Verfahren zum Herstellen eines biologisch abbaubaren Polyesterharzes nach einem der vorhergehenden Ansprüche, wobei das Molverhältnis der Diolkomponente (b) zu der Dicarbonsäurekomponente (a) 1,1:1 bis 1,5:1 beträgt.

9. Verfahren zum Herstellen eines biologisch abbaubaren Polyesterharzes nach einem der vorhergehenden Ansprüche, wobei die durch Formel 1 dargestellte Verbindung mindestens eines ausgewählt aus der Gruppe bestehend aus Glycerin, Trimethylolpropan und Pentaerythrit umfasst.

10. Verfahren zum Herstellen eines biologisch abbaubaren Polyesterharzes nach einem der vorhergehenden Ansprüche, wobei der Katalysator mindestens eines ausgewählt aus der Gruppe bestehend aus Tetrabutyltitanat, Tetraisopropyltitanat, Zinkacetat und Antimonoxid umfasst und der Gehalt des Katalysators 0,01 bis 5,0 g relativ zu 1 Mol der Dicarbonsäurekomponente (a) beträgt.

11. Verfahren zum Herstellen eines biologisch abbaubaren Polyesterharzes nach einem der vorhergehenden Ansprüche, wobei die Veresterungsreaktion oder die Umesterungsreaktion des Reaktionsgemischs in einem Reaktor in verschiedenen Temperaturbereichen durchgeführt wird, wobei eine erste Veresterungs- oder Umesterungsreaktion bei einer Temperatur im Bereich von 180 bis 200 °C durchgeführt wird und eine zweite Veresterungs- oder Umesterungsreaktion bei einer Temperatur im Bereich von 220 bis 235 °C durchgeführt wird.

12. Verfahren zum Herstellen eines biologisch abbaubaren Polyesterharzes nach einem der vorhergehenden Ansprüche, wobei der Stabilisator mindestens eines ausgewählt aus der Gruppe bestehend aus Phosphonsäure, Triphenylphosphat und Triethylphosphonoacetat umfasst und der Gehalt des Stabilisators 0,01 bis 5,0 g relativ zu 1 Mol der Dicarbonsäurekomponente (a) beträgt.

13. Verfahren zum Herstellen eines biologisch abbaubaren Polyesterharzes nach einem der vorhergehenden Ansprüche, wobei die Polykondensationsreaktion des Prepolymers bei einem Vakuumgrad von weniger als 1 Torr für 60 bis 420 Minuten durchgeführt wird.

14. Biologisch abbaubares Polyesterharz, erhältlich durch das Verfahren gemäß einem der Ansprüche 1 bis 13, wobei das biologisch abbaubare Polyesterharz Dicarbonsäurereste, die sich von einer aliphatischen Dicarbonsäure und einer aromatischen Dicarbonsäure ableiten, und Diolreste, die sich von einem kurzen aliphatischen Diol mit einer Kettenlänge von weniger als 4 Kohlenstoffatomen ableiten, umfasst und einen Schmelzflussindex von 100 g/10 Minuten oder weniger aufweist, wenn er bei 190 °C unter einer Last von 2,16 kg gemäß ASTM D1238 gemessen wird, wobei das Farbmerkmal L* 60 oder mehr beträgt und jedes von a* und b* 8 oder weniger gemäß der in der Beschreibung beschriebenen Methode beträgt.

15. Verwendung des biologisch abbaubaren Polyesterharzes nach Anspruch 14 in einer Anwendung, ausgewählt aus der Gruppe bestehend aus Einwegfolien oder -platten, Tafelgeschirr und landwirtschaftlichen Folien oder Platten.

## Revendications

1. Procédé permettant la préparation d'une résine polyester biodégradable, qui comprend (1) la soumission d'un mélange réactionnel comprenant (a) un composant acide dicarboxylique comprenant un acide dicarboxylique aromatique et un acide dicarboxylique aliphatique, (b) un composant diol comprenant un diol aliphatique ayant une longueur de chaîne courte inférieure à 4 atomes de carbone, et (c) un inhibiteur de décoloration à une réaction d'estérification ou à une réaction de transestérification en présence de la quantité totale d'un catalyseur, ou d'une partie de celui-ci, pour obtenir un prépolymère ; et (2) la soumission du prépolymère obtenu à l'étape (1) à une réaction de polycondensation en présence d'un stabilisant et du reste du catalyseur, ou sans catalyseur supplémentaire, pour obtenir une résine polyester biodégradable, ladite réaction de polycondensation du prépolymère étant effectuée à une température située entre 220 et 235 °C, ledit inhibiteur de décoloration comprenant un composé représenté par la formule 1 en une quantité de 1,5 à 3,5 % en mole lorsque Y est l'hydrogène ou un groupe méthyle, ou en une quantité de 1,0 à 2,0 % en mole lorsque Y est un groupe hydroxyle, sur la base du nombre total de moles du composant acide dicarboxylique (a), ladite résine polyester biodégradable ayant un indice de fluidité à chaud inférieur ou égal à 100 g/10 minutes lorsqu'elle est mesurée à 190 °C sous une charge de 2,16 kg selon la norme ASTM D1238 où la caractéristique de couleur L* est supérieure ou égale à 60, et a* et b* sont chacun inférieurs ou égaux à 8 selon la méthode décrite dans la description : 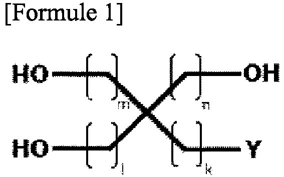 dans ladite formule ci-dessus, m, n, 1 ≥ 1, k ≥ 0, et Y étant l'hydrogène, un groupe hydroxyle ou un groupe méthyle.

2. Procédé permettant la préparation d'une résine polyester biodégradable selon la revendication 1, ledit acide dicarboxylique aromatique comprenant au moins un acide choisi dans le groupe constitué de l'acide téréphtalique, de l'acide isophtalique, de l'acide orthophtalique, de l'acide naphtalène dicarboxylique, du téréphtalate de diméthyle, de l'isophtalate de diméthyle, du phtalate de diméthyle et du dicarboxylate de diméthyle naphtalène.

3. Procédé permettant la préparation d'une résine polyester biodégradable selon la revendication 1 ou 2, ledit acide dicarboxylique aliphatique comprenant au moins un acide choisi dans le groupe constitué de l'acide oxalique, de l'acide malonique, de l'acide succinique, de l'acide glutarique, de l'acide adipique, de l'acide pimélique, de l'acide subérique, de l'acide azélaïque, de l'acide sébacique et de leurs composés esters.

4. Procédé permettant la préparation d'une résine polyester biodégradable selon la revendication 1, 2 ou 3, ledit acide dicarboxylique aromatique comprenant de l'acide téréphtalique et ledit acide dicarboxylique aliphatique comprenant de l'acide adipique.

5. Procédé permettant la préparation d'une résine polyester biodégradable selon l'une quelconque des revendications précédentes, la teneur en acide dicarboxylique aromatique étant de 20 % en mole à 60 % en mole sur la base du nombre total de moles du composant acide dicarboxylique, et la teneur en acide dicarboxylique aliphatique étant de 40 % en mole à 80 % en mole sur la base du nombre total de moles du composant acide dicarboxylique.

6. Procédé permettant la préparation d'une résine polyester biodégradable selon l'une quelconque des revendications précédentes, ledit composant diol (b) comprenant au moins un élément choisi dans le groupe constitué de l'éthylène glycol, du 1,2-propanediol et du 1,3-propanediol.

7. Procédé permettant la préparation d'une résine polyester biodégradable selon la revendication 6, ledit composant diol (b) comprenant de l'éthylène glycol.

8. Procédé permettant la préparation d'une résine polyester biodégradable selon l'une quelconque des revendications précédentes, ledit rapport molaire entre le composant diol (b) et le composant acide dicarboxylique (a) étant de 1,1:1 à 1,5:1.

9. Procédé permettant la préparation d'une résine polyester biodégradable selon l'une quelconque des revendications précédentes, ledit composé représenté par la formule 1 comprenant au moins un composé choisi dans le groupe constitué du glycérol, du triméthylolpropane et du pentaérythritol.

10. Procédé permettant la préparation d'une résine polyester biodégradable selon l'une quelconque des revendications précédentes, ledit catalyseur comprenant au moins un élément choisi dans le groupe constitué du titanate de tétrabutyle, du titanate de tétraisopropyle, de l'acétate de zinc et de l'oxyde d'antimoine, et la teneur en catalyseur étant de 0,01 à 5,0 g par rapport à 1 mole du composant acide dicarboxylique (a).

11. Procédé permettant la préparation d'une résine polyester biodégradable selon l'une quelconque des revendications précédentes, ladite réaction d'estérification ou ladite réaction de transestérification du mélange réactionnel étant effectuée dans un réacteur à différentes plages de températures, une première réaction d'estérification ou de transestérification étant effectuée à une température située entre 180 et 200 °C, et une seconde réaction d'estérification ou de transestérification étant effectuée à une température située entre 220 et 235 °C.

12. Procédé permettant la préparation d'une résine polyester biodégradable selon l'une quelconque des revendications précédentes, ledit stabilisant comprenant au moins un élément choisi dans le groupe constitué de l'acide phosphoreux, du phosphate de triphényle et du phosphonoacétate de triéthyle, et la teneur en stabilisant étant de 0,01 à 5,0 g par rapport à 1 mole du composant acide dicarboxylique (a).

13. Procédé permettant la préparation d'une résine polyester biodégradable selon l'une quelconque des revendications précédentes, ladite réaction de polycondensation du prépolymère étant effectuée à un degré de vide inférieur à 1 Torr pendant 60 à 420 minutes.

14. Résine polyester biodégradable pouvant être obtenue par le procédé selon l'une quelconque des revendications 1 à 13, ladite résine polyester biodégradable comprenant des résidus d'acide dicarboxylique dérivés d'un acide dicarboxylique aliphatique et d'un acide dicarboxylique aromatique et des résidus de diol dérivés d'un diol aliphatique court ayant une longueur de chaîne inférieure à 4 atomes de carbone, et présentant un indice de fluidité à chaud inférieur ou égal à 100 g/10 minutes lorsqu'elle est mesurée à 190 °C sous une charge de 2,16 kg selon la norme ASTM D1238 où la caractéristique de couleur L* est supérieure ou égale à 60, et a* et b* sont chacun inférieurs ou égaux à 8 selon la méthode décrite dans la description.

15. Utilisation de la résine polyester biodégradable selon la revendication 14 dans une application choisie dans le groupe constitué de films ou feuilles jetables, de vaisselle et de films ou feuilles agricoles.
